# EUROPEAN PATENT SPECIFICATION

(11) **EP 0 444 743 B1**
(45) Date of publication and mention of the grant of the patent: **03.05.1995**
(21) Application number: 91200384.5
(22) Date of filing: 22.02.1991
(51) Int. Cl.: A01G 9/22

(54) **Bracket and section intended for fixing a horizontal shade in a greenhouse or glasshouse**
Klammer und Profil zum Befestigen eines horizontalen Schirms in einem Gewächshaus
Attache et profilé pour fixer un store horizontal dans une serre

(30) Priority: 28.02.1990 NL 9000479
(43) Date of publication of application: 04.09.1991
(73) Proprietor: WESTLAND'S KASSENBOUWBEDRIJF B.P. VAN DER VALK & ZN B.V., NL-2681 LP Monster (NL)
(72) Inventor: van der Valk, Johannes Bernardus Maria, NL-2681 LP Monster (NL)
(74) Representative: de Bruijn, Leendert C.

(56) References cited:
- EP-A- 0 338 925
- US-A- 3 719 013
- HORTEC PRODUCTS HOLLAND 'Hortec HP 11 Een nieuw doekprofiel met opvallendepluspunten' February 2, 1988 , N.T.V. BLEISWIJK
- LEEN HUISMAN 'Schermen met V.A. garant dat is een absolute must (bladzijden 1-4)' February 3, 1987 , N.T.V. BLEISWIJK

## Description

The invention relates to a bracket of resilient metal wire according to the preamble of claim 1. The invention also relates to a section for accommodating such a bracket according to the preamble of claim 4.

Such bracket and section are known from Leen Huisman "Schermen met V.A. Garant dat is een absolute must (blz 1-4)" February 3, 1987, N.T.V. Bleiswijk page 1-3.

The known bracket is used to guide the section along chords pulled taut above and below the shade of a shading structure in a greenhouse or a glasshouse. Separate clips are used to join the shade to the section, and the section has an extra thickened edge.

The know bracket thus serves only for guiding along the taut chords, the two legs of the bracket in that case being equal to each other.

The object of the invention is to provide a bracket which, apart from its guiding purpose, can also be used for fixing the shade to the section, as a result of which clips are not needed, a better fixing is obtained, and less light loss occurs.

Therefore, the bracket according to the invention is designed according to the characterising part of claim 1.

According to a second aspect, the object of the invention is to provide a section intended for accommodating brackets such as according to the invention, and which differs from the known sections as indicated above. With such a section, it is allowed that the bracket is mounted on either the one or the other side of that section. For that purpose, the section is characterised by the features according to claim 4.

The invention will be explained in greater detail with reference to the drawing, in which:
Fig. 1 is a perspective view of a shade section and a part of a shade, with a number of clamping brackets thereon;
Fig. 2 is a cross-section of Fig. 1; and
Figs. 3 and 4 show variants of Fig. 1.

A shade section extruded from aluminium is indicated by 1 and generally runs horizontally in a greenhouse or glasshouse at the level of the gutters.

A section of this type is known in practice and is moved parallel to itself in order to open or to close a flexible shade 2 made of cloth or sheeting.

In the closed position the shade section rests with the left side against a fixed bar of the greenhouse or glasshouse. Such bars (not shown) run parallel to each other and are disposed at specific distances from each other as part of the frame of the greenhouse.

The shade section 1 can be moved parallel to itself in the horizontal direction. On movement to the left the shade 2 is folded out, so that the space in the greenhouse below the shade 2 is better shut off from temperature variations.

When the shade has to be opened the shade section 1 is moved to the right and the shade 2 folds up.

Nylon cords are pulled taut between the bars in the greenhouse in order to ensure that the folded shade 2 does not project too much.

The top taut cords are indicated by 3, and the bottom cords by 4.

The bottom cords 4 serve to support the weight of the folded shade 2, and the top cords 3 to prevent flying up when the ventilation windows are open.

The right end of the shade 2 is fixed at the right side to a fixed bar which is a distance away from the fixed bar against which the shade section 1 rests when the shade 2 is closed.

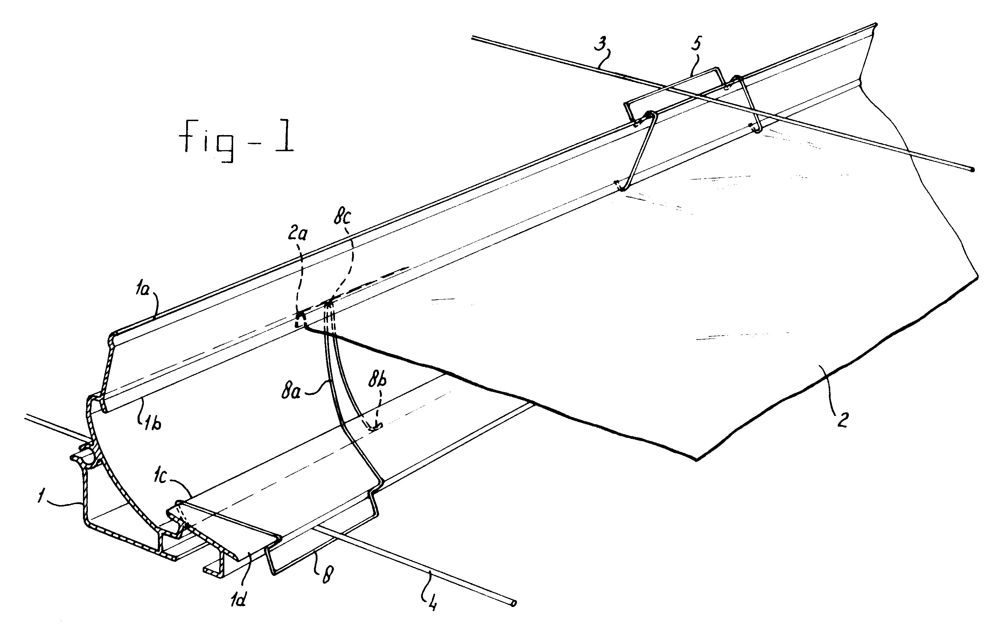

According to the state of the art, brackets 5 made of resilient metal wire are used as a guide along the cords 3 and 4. One such known bracket 5 is shown on the right in Fig. 1, is clamped around the edges 1a and 1b of the section 1, and forms a wide opening for the cord 3.

In the state of the art the same brackets 5 are clamped around the edges 1c and 1d of the section 1, and then form a wide opening for the cord 4.

Every known shade section 1 thus has a large number of such brackets 5, the number on the top side generally being half the number on the bottom side.

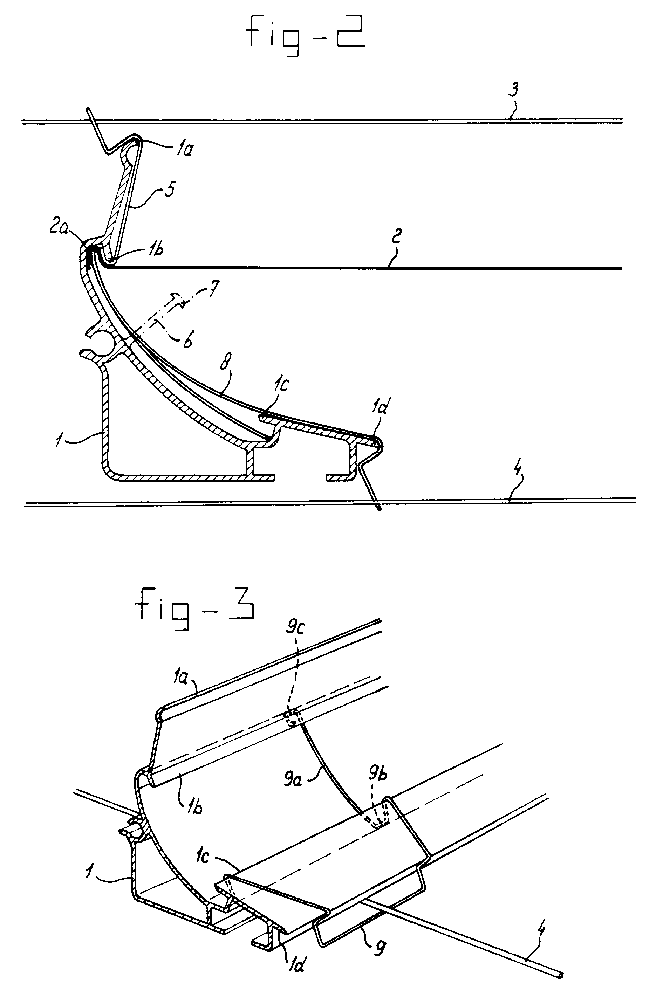

The known shade sections also have a projecting edge 6 with thickened end 7, which is shown by dot-and-dash lines in Fig. 2.

The left edge of the shade 2 is then folded round the thickened end 7 and the shade is fixed by means of a sort of clip on the projecting edge 6, 7. These clips are generally made of plastic and when fitted clamp the folded edge of the shade 2 against the projecting edge 6, 7.

In the growing of some crops the shade 2 is sometimes removed completely after only a short time. The folded shade in that case still gives too much light loss and thus loss of yield. For removal of the shade, it is simply pulled away from the projecting edge 6, 7, in which case the clips spring off and are lost, but also fall between the crops.

According to the application, no clips need be used and the projecting edge 6, 7 can be omitted.

According to the invention, the brackets used for guiding along the cords 3 and 4 are modified in such a way that they can also be used for fixing the shade to the section 1.

Such a bracket is indicated by 8 on the left in Fig. 1. This bracket 8 is largely the same as the known bracket 5, but one leg 8a is extended and bent back, while the free end 8b grips behind the edge 1c of the section 1.

The bent-back leg 8a is so long that the bend 8c rests resiliently against the edge 1b of the section 1.

The free edge 2a of the shade 2 is then laid in the channel formed by the edge 1b, and the bend 8c of the bracket 8 presses the free edge 2a against the channel.

No separate clips are therefore needed.

In addition, the brackets 8 remain on the section 1 when the shade 2 is pulled away from the section 1.

The free edge 2a of the shade 2 can also engage in the channel formed by the edge 1c and is then pressed by a bracket 8 which also engages on the edges 1a and 1b of the section 1.

This is possible because the section 1 is to a certain extent symmetrical, i.e. the distance between the edges 1d and 1b is equal to the distance between the edges 1a and 1c, and the edge 6, 7 is omitted.

According to the invention, the shade 2 is fixed at such a point on the section 1 that as little light loss as possible occurs.

The bracket can, of course, also be made differently.

Another embodiment of the clamping bracket is shown in Fig. 3 in a perspective view. This clamping bracket is indicated by 9 and largely corresponds to the clamping bracket 8, except that the right leg is different.

The extended leg 9a is first folded inwards at 9b, in order to engage behind the edge 1c of the section 1, and then runs into a curved edge 9c which can clamp the edge of the shade 2 in the channel formed by the edge 1b of the section 1, in the same way as the bend 8c of the bracket 8.

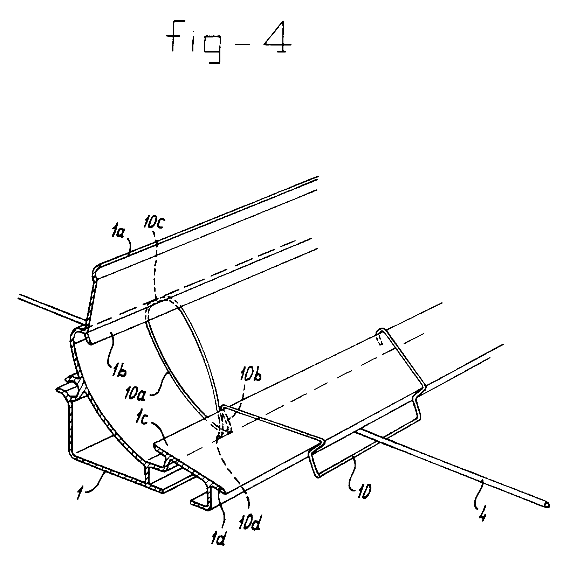

Yet another embodiment of the clamping bracket is shown in Fig. 4 and is indicated by 10. The bracket 10 has features of the bracket 8 and of the bracket 9, and is preferred.

The right leg of the bracket 10 is conventional.

The left leg 10a is first folded around the edge 1c, like the bracket 9 at 10b. At 10c the leg 10a is folded back and with the free end 10d engages in the channel formed by the edge 1c.

## Claims

1. A bracket of resilient metal wire intended for fixing to a section of a shading structure in a greenhouse or glasshouse, the section having a first and a second surface mutually spaced at approximately 90°, said first surface defining a second (1b) free edge facing the second surface and said second surface defining third (1c) and fourth (1d) mutually oppositely directed free edges, said second and third free edges being mutually closer than said second and fourth free edge, channel sections adjoining said second and third free edges to allow portions of the bracket to engage under said second and third free edges, the section defining an uninterrupted span between the two channels, and being for instance according to claim 4, said bracket (8; 9; 10) having mutually spaced first and second legs interconnected at one end by a crosspiece, the bracket thereby being in an essentially U-shaped form and said legs lying partly in a common plane, each leg having a first bend out of, and in one direction generally perpendicular to said common plane, to form a first hook portion for engagement with the fourth free edge of said section, at least one leg having at a distance from said first bend a second bend in a direction opposite to that of said first bend in order to define a second hook portion for engagement with the third free edge of said section, the other leg having at least one portion (8b; 9b; 10b) for engagement under the third free edge of said section, characterised in that said other leg also has at least one portion (8c; 9c; 10c) for engagement under the second free edge of said section, said portion for engaging under said second free edge being located on an extension (8a; 9a; 10a) of said other leg located beyond said distance from said first bend.

2. Bracket according to claim 1, wherein said extension is loop-shaped, such that two wire parts run between the second hook profile (1b) and the first hook profile (1c), with the free end of the second leg engaging the third hook profile (1c).

3. Bracket according to claim 1 or 2, wherein apart from the extension (8a;9a;10a) of the second leg, said first and second legs have a substantial similar shape.

4. A section for accommodating brackets according to any one of the preceding claims, having a first and a second surface mutually spaced at approximately 90°, said first surface defining first (1a) and second (1b) mutually oppositely directed free edges and said second surface defining third (1c) and fourth (1d) mutually oppositely directed free edges, said second and third free edges being mutually closer than said first and fourth free edges, channel sections adjoining said second and third free edges to allow portions of the bracket to engage under said second and third free edges, characterised in that the distance between the first edge and the base of the third edge channel is equal to the distance between the fourth edge and the base of the second edge channel, the distances between the first and second edges and the third and fourth edges respectively being equal whereby the bracket may be mounted on either the first or second surface with the extension engaging the third edge channel or the second edge channel respectively, the section defining an uninterrupted span between the two channels to allow the bracket extension to locate between one channel and the other channel or its associated edge.

5. Section according to Claim 4, wherein said fixing planes are staggered with respect to the mutual leg of said section, to the side facing the opposite fixing plane, and each fixing plane laterally extending on either side of the connection position with the mutual leg of said section.

## Patentansprüche

1. Halterung aus elastischem Metalldraht zum Befestigen eines Profils einer Abschirmkonstruktion in einem Gewächshaus, wobei das Profil eine erste und eine zweite Fläche aufweist, die um ungefähr 90° voneinander beabstandet sind, wobei die erste Fläche einen zweiten (1b) freien Rand aufweist, der der zweiten Fläche zugewandt ist, und die zweite Fläche einen dritten (1c) und einen vierten (1d) freien Rand aufweist, die einander entgegengesetzt gerichtet sind, wobei der zweite und der dritte freie Rand einander näher sind als der zweite und der vierte freie Rand, Rinnenprofile, die an den zweiten und den dritten freien Rand angrenzen, so daß Abschnitte der Halterung unter den zweiten und den dritten freien Rand eingreifen können, wobei sich das Profil ohne Unterbrechung zwischen den beiden Rinnen erstreckt und beispielsweise Anspruch 4 entspricht, wobei die Halterung (8; 9; 10) einen ersten und zweiten voneinander beabstandeten Schenkel aufweist, die an einem Ende durch ein Querstück miteinander verbunden sind, so daß die Halterung daher im wesentlichen eine U-Form aufweist, und die Schenkel teilweise in einer gemeinsamen Ebene liegen, wobei jeder Schenkel eine Krümmung aus der gemeinsamen Ebene in einer Richtung im allgemeinen senkrecht dazu aufweist und so einen ersten Hakenabschnitt zum Eingriff mit dem vierten freien Rand des Profils aufweist, wobei wenigstens ein Schenkel in einem Abstand zu der ersten Krümmung eine zweite Krümmung in einer der ersten Richtung entgegengesetzten Richtung aufweist und so einen zweiten Hakenabschnitt zum Eingriff mit dem dritten freien Rand des Profils aufweist, wobei der andere Schenkel wenigstens einen Abschnitt (8b; 9b; 10b) zum Eingriff unter den dritten freien Rand des Profils aufweist, **dadurch gekennzeichnet**, daß der andere Schenkel ebenfalls wenigstens einen Abschnitt (8c; 9c; 10c;) zum Eingriff unter den zweiten freien Rand des Profils aufweist, wobei sich der Abschnitt zum Eingriff unter den zweiten freien Rand an einer Verlängerung (8a; 9a; 10a) des anderen Schenkels befindet, die sich außerhalb des Abstandes von der ersten Krümmung befindet.

2. Halterung nach Anspruch 1, wobei die Verlängerung schlaufenförmig ist, so daß zwei Drahtteile zwischen dem zweiten Hakenprofil (1b) und dem ersten Hakenprofil (1c) verlaufen, wobei das freie Ende des zweiten Schenkels mit dem dritten Hakenprofil (1c) in Eingriff ist.

3. Halterung nach Anspruch 1 oder 2, wobei, abgesehen von der Verlängerung (8a; 9a; 10a) des zweiten Schenkels, der erste und der zweite Schenkel eine im wesentlichen gleiche Form aufweisen.

4. Profil zur Aufnahme von Halterungen nach einem der vorangehenden Ansprüche, das eine erste und eine zweite, voneinander im wesentlichen um 90° beabstandete, Fläche aufweist, wobei die erste Fläche einen ersten (1a) und einen zweiten (1b) freien Rand aufweist, die einander entgegengesetzt gerichtet sind, und die zweite Fläche einen dritten (1c) und einen vierten (1d) freien Rand aufweist, die einander entgegengesetzt gerichtet sind, wobei der zweite und der dritte freie Rand einander näher sind als der erste und der vierte freie Rand, Rinnenprofile, die an den zweiten und dritten freien Rand angrenzen, so daß Abschnitte der Halterung unter den zweiten und den dritten freien Rand eingreifen können, **dadurch gekennzeichnet**, daß der Abstand zwischen dem ersten Rand und dem Boden der Rinne des dritten Randes dem Abstand zwischen dem vierten Rand und dem Boden der Rinne des zweiten Randes gleich ist, wobei die Abstände zwischen dem ersten und dem zweiten Rand sowie dem dritten und dem vierten Rand jeweils einander gleich sind, so daß die Halterung entweder an der ersten oder der zweiten Fläche angebracht werden kann, wobei die Verlängerung in die Rinne des dritten Randes bzw. die Rinne des zweiten Randes eingreift, wobei sich das Profil ohne Unterbrechung zwischen den beiden Rinnen erstreckt, so daß sich die Halterungsverlängerung zwischen einer Rinne und der anderen Rinne bzw. ihrem zugehörigen Rand befinden kann.

5. Profil nach Anspruch 4, wobei die Befestigungsebenen in bezug auf den gemeinsamen Schenkel des Profils zu der der gegenüberliegenden Befestigungsebene zugewandten Seite versetzt sind, und sich jede Befestigungsebene seitlich zu beiden Seiten der Position der Verbindungsstelle mit dem gemeinsamen Schenkel des Profils erstreckt.

## Revendications

1. Attache en fil métallique élastique destinée à fixer un profilé sur une structure de store dans une serre ou une verrière, le profilé disposant d'une première et d'une seconde surfaces espacées l'une par rapport à l'autre d'environ 90°, ladite première surface définissant un deuxième bord libre (1b) faisant face à la seconde surface et ladite seconde surface définissant un troisième (1c) et un quatrième (1d) bords libres orientés de façon opposée l'un par rapport à l'autre, lesdits deuxième et troisième bords libres étant mutuellement plus proche que lesdits deuxième et quatrième bords libres, des sections en canal rejoignant lesdits deuxième et troisième bords libres pour permettre aux parties de l'attache de se mettre en prise sous lesdits deuxième et troisième bords libres, le profilé définissant un espacement non interrompu entre les deux canaux, et étant par exemple conforme à la revendication 4, ladite attache (8; 9; 10) comprenant des première et seconde jambes espacées l'une par rapport à l'autre et reliées à une extrémité par une pièce transversale, l'attache présentant par ce moyen globalement une forme de U et lesdites jambes reposant partiellement dans un plan commun, chaque jambe présentant une première courbure, et, dans une direction globalement perpendiculaire audit plan commun, pour former une première partie en crochet pour la mise en prise avec le quatrième bord libre dudit profilé, au moins une jambe disposant, à une certaine distance de ladite courbure, une seconde courbure dans un sens opposé à celui de ladite première courbure dans le but de définir une seconde partie en crochet pour la mise en prise avec le troisième bord libre dudit profilé, l'autre jambe disposant d'au moins une partie (8b; 9b; 10b) pour la mise en prise sous le troisième bord libre dudit profilé, caractérisée en ce que ladite autre jambe dispose aussi d'au moins une partie (8c; 9c; 10c) pour la mise en prise sous le deuxième bord libre dudit profilé, ladite partie se mettant en prise sous ledit deuxième bord libre étant située sur une extension (8a; 9a; 10a) de ladite autre jambe disposée au-delà de ladite distance par rapport à ladite première courbure.

2. Attache selon la revendication 1, dans laquelle ladite extension est en forme de boucle, de façon que deux parties en fil s'étendent entre le deuxième profil en crochet (1b) et le premier profil en crochet (1c) avec l'extrémité libre de la seconde jambe se mettant en prise dans le troisième profil en crochet (1c).

3. Attache selon la revendication 1 ou 2, dans laquelle, mise à part l'extension (8a; 9a; 10a) de la seconde jambe, lesdites première et seconde jambes présentent une forme globalement similaire.

4. Profilé pour recevoir les attaches selon l'une quelconque des revendications précédentes, disposant d'une première et d'une seconde surfaces espacées l'une par rapport à l'autre d'approximativement 90°, ladite première surface définissant un premier (1a) et un deuxième (1b) bords libres orientés de façon opposée l'un par rapport à l'autre et ladite seconde surface définissant un troisième (1c) et un quatrième (1d) bords libres dirigés de façon opposée l'un par rapport à l'auteur, lesdits deuxième et troisième bords libres étant mutuellement plus proches que lesdits premier et quatrième bords libres, des sections en canal rejoignant lesdits deuxième et troisième bords libres pour permettre aux parties de l'attache de se mettre en prise sous lesdits deuxième et troisième bords libres, caractérisé en ce que la distance entre le premier bord et la base du troisième canal de bord est égale à la distance entre le quatrième bord et la base du deuxième canal de bord, les distances entre les premier et deuxième bords et les troisième et quatrième bords étant respectivement égales, ce par quoi, l'attache peut être montée soit sur la première soit sur la seconde surface avec l'extension se mettant respectivement en prise sur le troisième canal de bord ou le deuxième canal de bord, le profilé définissant un espacement ininterrompu entre les deux canaux pour permettre à l'extension de l'attache de se situer entre un canal et l'autre canal ou son bord associe.

5. Profilé selon la revendication 4, dans lequel lesdits plans de fixation sont étagés par rapport à la jambe mutuelle dudit profilé, vers le côté faisant face au plan de fixation opposé, et chaque plan de fixation s'étendant latéralement sur les deux côtés de la position de liaison avec la jambe mutuelle dudit profilé.
